# EUROPÄISCHE PATENTSCHRIFT

(11) **EP 2 649 347 B1**
(45) Veröffentlichungstag und Bekanntmachung des Hinweises auf die Patenterteilung: **09.04.2014**
(21) Anmeldenummer: 11790870.7
(22) Anmeldetag: 16.11.2011
(51) Int. Cl.: F16H 25/22, B62D 5/04

(54) **KUGELGEWINDETRIEB**
BALL SCREW NUT DRIVE
ENTRAINEMENT A VIS ET ECROU A BILLES

(30) Priorität: 10.12.2010 DE 102010054134
(43) Veröffentlichungstag der Anmeldung: 16.10.2013
(73) Patentinhaber: ThyssenKrupp Presta AG, 9492 Eschen (LI)
(72) Erfinder: KIFORIUK, Alexander, 73061 Ebersbach (DE); KONTNER, Dennis, 73033 Göppingen (DE); NGAMGA NZEPA, Jules, 71409 Schwaikheim (DE); STECK, Philippe, CH-3123 Belp (CH)
(74) Vertreter: Lenzing Gerber Stute
(86) Internationale Anmeldenummer: PCT/EP2011/005765
(87) Internationale Veröffentlichungsnummer: WO 2012/076114

(56) Entgegenhaltungen:
- DE-A1-102004 058 963
- DE-A1-102005 023 274
- DE-A1-102006 053 244
- DE-A1-102007 026 605
- DE-A1-102007 049 114

## Beschreibung

Die vorliegende Erfindung betrifft einen Kugelgewindetrieb mit den Merkmalen des Oberbegriffs des Anspruchs 1.

Kugelgewindetriebe wandeln Drehbewegungen in Lenkbewegungen um. In Kraftfahrzeugen finden Kugelgewindetriebe zunehmend Anwendung bei elektromechanischen Lenkhilfen in Zahnstangenlenkungen. Bei solchen Lenkhilfen oder Servoantrieben ist die Zahnstange abschnittsweise als Kugelgewindespindel ausgebildet. Ein Elektromotor treibt die zugehörige Kugelmutter über einen Zahnriemen oder über ein anderes Getriebe an und unterstützt damit die Längsverschiebung der Zahnstange elektromotorisch.

Aus der DE 10056275 A1 ist ein Kugelgewindetrieb bekannt, der eine auf einer Kugelgewindespindel angeordnete Spindelmutter aufweist, in deren Innenumfang Kugelrillen als Gewindegang zum Abwälzen von Kugeln vorgesehen sind. Am Außenumfang der Spindelmutter sind mit jeweils einem Umlenkkanal für Kugeln versehene Umlenkkörper angeordnet. Diese Umlenkkörper verbinden mit ihren beiden Enden einen Anfang einer Windung mit einem Ende einer Windung, um ein endloses Umlaufen der Kugel zu ermöglichen. Der Umlenkkörper ist in einer Ausnehmung des Befestigungflansches angeordnet und in radialer Richtung gehalten. Dieser Befestigungsflansch ist fest mit der Spindelmutter verbunden. Die Ausnehmung des Befestigungsflansches kann etwas größer ausgebildet sein, um ein radiales Spiel zwischen dem Befestigungsflansch und dem Umlenkstück zu ermöglichen. Dieses radiale Spiel kann erforderlich sein, um Fertigungstoleranzen zu berücksichtigen. Der Umlenkkörper steht über die äußere Oberfläche der Kugelmutter hinaus, so dass sich eine unrunde äußere Kontur ergibt. Bei einem Einsatz in einer Kraftfahrzeuglenkung ist die Gewindespindel drehfest, aber axial verschieblich in einem Lenkungsgehäuse gelagert. Die Kugelmutter rotiert im Betrieb unter Einfluss des Elektromotors und der Gewindespindel. Problematisch ist bei dieser Ausführungsform eines Kugelgewindetriebs, dass bei einem Bruch von Komponenten des Getriebes, bei Zahnriemenantrieben insbesondere bei einem Bruch des Zahnriemens oder der Riemenscheibe, Komponenten in den Umlaufbereich der Kugelmutter gelangen, sich zwischen dem Kugelumlauf und dem Lenkungsgehäuse verklemmen und die Drehung blockieren können. Dies führt nicht nur zu dem Ausfall der Servounterstützung, sondern zu einem Blockieren der gesamten Kraftfahrzeuglenkung. Dies ist aus Sicherheitsgründen unerwünscht.

Aus der DE 10 2004 055 423 A1 ist ein Kugelgewindetrieb mit einer Kugelmutter bekannt, bei der Umlenkkörper aus Kunststoff von außen in den Grundkörper der Kugelmutter eingesteckt sind. Die Umlenkkörper stehen über dem äußeren Umfang des metallischen Grundkörpers der Kugelmutter hinaus. Zur Befestigung der Umlenkkörper in der Kugelmutter ist ein Zahnriemenrad so ausgebildet, dass es mit seiner Verzahnung größer als der äußere Umfang der Umlenkkörper ausgebildet ist und in seinem Innenraum Ausnehmungen für die Umlenkkörper gebildet sind. Das Zahnriemenrad kann auf die Kugelmutter und insbesondere über die Umlenkkörper gestülpt werden. Die äußere Überdeckung der Umlenkkörper wird durch das Zahnsegment des Riemenrades bewirkt, jedoch nicht vollständig. Es verbleiben frei über die Oberfläche der Kugelmutter hinaus stehende Abschnitte, die als Vorsprünge über die Kugelmutter hinaus stehen. Bei einem Bruch des Zahnriemens besteht die Möglichkeit, dass Teile des Zahnriemens zwischen den Grundkörper und den Umlenkkörper gelangen und dann die Drehung der Kugelmutter dadurch behindern, dass diese Teile zwischen dem Umlenkkörper und dem Lenkungsgehäuse eingeklemmt werden. Auch in diesem Fall kann der Bruch des Zahnriemens zu einer Blockierung der Lenkung führen, so dass nicht nur die Servounterstützung entfällt, sondern auch das Fahrzeug vollständig unlenkbar wird. Aus der DE 10 2006 053 244 A1 ist ein Kugelgewindetrieb gemäß dem Oberbegriff des Anspruchs 1 bekannt.

Es ist daher Aufgabe der vorliegenden Erfindung, einen Kugelgewindetrieb zu schaffen, bei dem bei einem Bruch des Zahnriemens das Fahrzeug mit einer weitaus größeren Wahrscheinlichkeit lenkbar bleibt und der einfach zu fertigen und zu montieren ist

Diese Aufgabe wird von einem Kugelgewindetrieb mit den Merkmalen des Anspruchs 1 gelöst.

Weil die Kugelmutter an einem Ende einen Anschlussbereich für die Befestigung einer Riemenscheibe und an dem anderen Ende einen Lagersitz aufweist, sowie eine auf die Kugelmutter aufgesteckte Hülse, die einen Umlenkkörper an der Kugelmutter sichert und die den Bereich zwischen dem Anschluss für die Riemenscheibe und den Lagersitz rohrförmig umgibt, und weil die Hülse an ihrer Innenseite drei bogenförmige, federnde Stützbereiche aufweist, die etwa gleichwinklig über den innere Umfang verteilt sind und die an der äußeren Oberfläche der Kugelmutter in Umfangsrichtung jeweils etwa über einen Umfangswinkel von 40° bis 60° anliegen, ist sie besonders geeignet, die unterschiedliche thermische Ausdehnung der aus Metall gefertigten Kugelmutter und der aus Kunststoff, beispielsweise im Spritzgussverfahren, gefertigten Hülse auszugleichen. Außerdem wird durch diese Ausbildung der Hülse eine zentrische Montage mit einfachen Mitteln möglich, wobei die Montage relativ unempfindlich gegenüber Fertigungstoleranzen ist und deshalb auch ohne übermäßigen Kraftaufwand manuell vorgenommen werden kann.

Vorzugsweise ist die Hülse einstückig ausgebildet und weist auf ihrer Innenseite Anlageflächen auf, die auf der äußeren Oberfläche der Kugelmutter mit einem Schiebesitz reibschlüssig anliegen. Dies erleichtert die Fertigung, indem die Hülse bei der Fertigung einfach manuell auf die Kugelmutter aufgeschoben werden kann.

Der Umlenkkörper für die Kugelrückführung ist vorzugsweise aus einem etwa U-förmigen Metallrohr gefertigt. Ein solcher Umlenkkörper ist einteilig und kann in etwa tangentiale Bohrungen der Kugelmutter, die den Gewindegang an beiden Enden durchsetzen, eingesteckt werden. Die Hülse weist vorzugsweise eine innere Ausnehmung auf, die einen derartigen Abstand von der Oberfläche der Kugelmutter aufweist, dass der Umlenkkörper fest in dieser Ausnehmung sitzt, wenn die Hülse auf die Kugelmutter aufgesetzt ist. Dies vereinfacht ebenfalls die Fertigung, da der Umlenkkörper lediglich in die beiden Bohrungen eingesetzt werden muss und die Hülse dann auf die Kugelmutter aufgeschoben werden kann, wobei die Kugelmutter den Umlenkkörper zwangsläufig in seinem Sitz sichert.

Der Anschluss für die Riemenscheibe ist vorzugsweise als Flansch an der dem Lagersitz abgewandten Stirnseite der Kugelmutter ausgebildet. Die Riemenscheibe ist hierbei mit Befestigungsmitteln an der Stirnseite des Flansches drehfest mit der Kugelmutter verbunden. Der Außendurchmesser des Flansches entspricht vorzugsweise dem Außendurchmesser der Hülse, so dass sich bei aufgesteckter Hülse eine zylindermantelförmige äußere Oberfläche ergibt, die im Wesentlichen einen konstanten Durchmesser über die axiale Erstreckung der Vorrichtung aufweist. Die Riemenscheibe ist in einem bevorzugten Ausführungsbeispiel koaxial auf den äußeren Umfang des Flanschsbereichs aufgepresst und überragt das dem Flanschbereich benachbarte Ende der Hülse. Dabei ist es von Vorteil, wenn ein geringer Spalt, vorzugweise etwa 0,1 - 1 mm breit, zwischen der Hülse und der Innenseite der Riemenscheibe vorgesehen ist. Dieser Spalt ist so klein, dass eventuelle Bruchstücke ab einer entsprechenden Größe nicht eindringen können. Andererseits wird eine Berührung der Hülse und der Riemenscheibe vermieden. An dem Ende der Hülse, das dem Flansch abgewandt ist, endet die Hülse in einem geringen Abstand von einem Wälzlager, das die Kugelmutter in dem Lenkungsgehäuse lagert. Der Abstand ist auch hier gering, vorzugsweise im Bereich von 0,1 - 1 mm. Dies gewährleistet, dass keine Teile mit einer Größe oberhalb der Spaltbreite in den Zwischenraum eindringen können. Bruchstücke von Getriebeteilen, Zahnriemen oder dergleichen unterhalb dieser Größe können in den Spalt eindringen. Dies ist jedoch nicht schädlich, weil diese Bruchstücke in dem ringförmig umlaufenden Spalt nicht in der Lage sind, die Kugelmutter gegenüber dem Lenkungsgehäuse zu blockieren.

Nachfolgend wird ein Ausführungsbeispiel der vorliegenden Erfindung anhand der Zeichnung beschrieben. Es zeigen:
- Fig. 1:: einen Kugelumlauf mit Hülse und Riemenscheibe in einem Längsschnitt;
- Fig. 2:: den Kugelumlauf aus Fig. 1 in einem Querschnitt entlang der Linie II-II aus Fig. 4;
- Fig. 3:: die Hülse aus Fig. 1 und Fig. 2 in einer perspektivischen Darstellung; sowie
- Fig. 4:: die Anordnung aus Fig. 1 mit abgenommener Riemenscheibe in einer Seitenansicht.

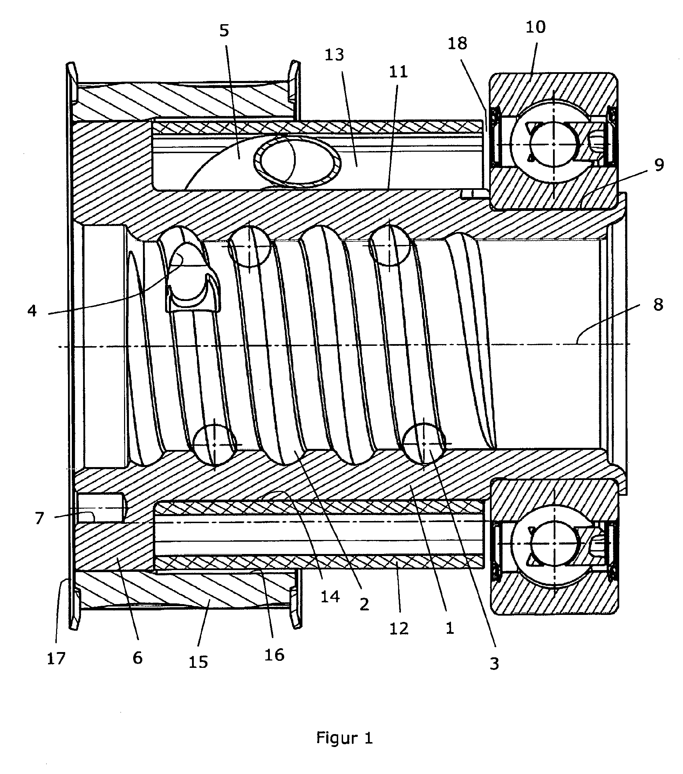

In der Fig. 1 ist in einem Längsschnitt eine Kugelmutter 1 dargestellt, die auf ihrer Innenseite ein Kugelgewinde 2 trägt. In dem Kugelgewinde 2 laufen hier schematisch angedeutete Kugeln 3 in an sich bekannter Weise um. Jeweils eine Bohrung 4 ist für den Eintritt bzw. Austritt von Kugeln für die Rückführung zu dem gegenüber liegenden Ende des Gewindes 2 vorgesehen. In die Bohrung 4 ist ein rohrförmiger Umlenkkörper 5 eingesetzt. Der Umlenkkörper 5 ist U-förmig oder bügelförmig ausgebildet und sitzt mit seinem zweiten, nicht sichtbaren Ende in einer entsprechenden Bohrung, die an dem anderen Ende des Gewindegangs 2 angeordnet ist. An der in Figur 1 linken Stirnseite ist ein im Durchmesser vergrößerter Flansch 6 vorgesehen, an dessen Stirnseite Gewindebohrungen 7 parallel zu einer Achse 8 der Kugelmutter 1 eingebracht sind. Das gegenüberliegende Ende der Kugelmutter 1 ist mit einem Lagersitz 9 versehen, auf dem ein Kugellager 10 sitzt. Das Kugellager 10 ist dazu vorgesehen, die Kugelmutter 1 in einem Lenkungsgehäuse zu lagern.

Die Kugelmutter 1 ist im Wesentlichen rotationssymmetrisch ausgebildet und weist in dem Bereich, in dem der Umlenkkörper 5 sitzt, eine etwa kreiszylindrische äußere Umfangsfläche auf,die koaxial zu der Achse 8 orientiert ist. Der Flanschbereich 6 ist ebenfalls rotationssymmetrisch ausgebildet und weist einen größeren äußeren Durchmesser auf.

Eine Hülse 12 ist von der Seite des Lagersitzes 9 her auf die Kugelmutter 1 aufgestülpt und umgibt den Bereich 11 nahezu vollständig. Eine innere Ausnehmung 13 der Hülse 12 ist so dimensioniert, dass der Umlenkkörper 5 spielfrei zwischen der Kugelmutter 1 und der Hülse 12 sitzt. Die Hülse 12 selbst ist durch eine Anlagefläche 14 auf der Fläche 11 der Kugelmutter 1 zentriert. Zwei weitere flächige Anlagen, die in dieser Darstellung nicht sichtbar sind, stellen den zentrischen Sitz der Hülse 12 sicher.

Auf den Flanschbereich 6 ist eine Riemenscheibe 15 aufgesetzt. Die Riemenscheibe 15 ist etwa ringförmig ausgebildet und sitzt mit einer Presspassung auf dem äußeren Umfang des Flanschbereichs 6. Die Riemenscheibe 15 überragt den Flanschbereich 6 in Richtung der Hülse 12. Dort, wo die Riemenscheibe 15 die Hülse 12 überragt, ist der Innendurchmesser der Riemenscheibe 15 vergrößert. Es bildet sich ein geringer Spalt 16 zwischen der inneren Umfangsfläche der Riemenscheibe 15 und der äußeren Oberfläche der Hülse 12, so dass diese Bauelemente sich nicht berühren. Stirnseitig ist die Riemenscheibe 15 mit einer Scheibe 17 versehen, die mittels Gewindeschrauben mit den Bohrungen 7 der Kugelmutter 1 verschraubt ist.

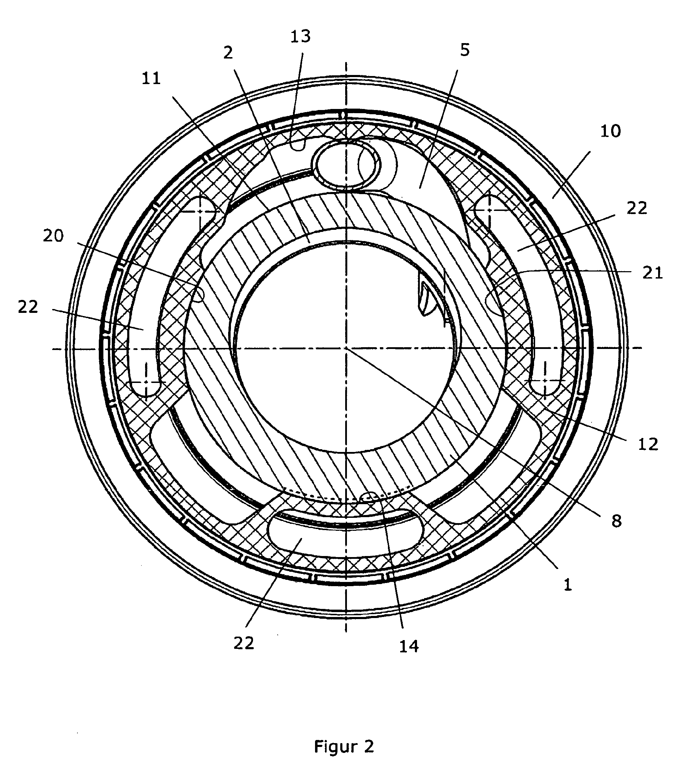

Nach der Montage des Umlenkkörpers 5 und der Hülse 12 wird bei der Fertigung das Wälzlager 10 auf den Sitz 9 aufgesetzt und dort gesichert. Die Hülse 12 ist in Axialrichtung in diesem Bereich so dimensioniert, dass sich ein geringer Spalt 18 bildet, der sicherstellt, dass die Hülse 12 das Lager 10 nicht berührt. In der Figur 2 ist die Vorrichtung aus Figur 1 in einem Querschnitt dargestellt. Gleiche Bauelemente tragen gleiche Bezugsziffern. Die Kugelmutter 1 ist in dem Bereich des Gewindegangs 2 mit der äußeren zylindermantelförmigen Oberfläche 11 mit kreisförmigen Querschnitt versehen. Die Hülse 12 liegt mit der Anlagefläche 14 an der Oberfläche an. Zwei weitere Anlageflächen 20 und 21 sind für den festen, reibschlüssigen Sitz der Hülse 12 auf der Oberfläche 11 vorgesehen. Die Anlageflächen 14, 20 und 21 sind über den Umfang der Kugelmutter 1 verteilt. Sie erstrecken sich jeweils über etwa 50° des Umfangs und weisen zwischen der Fläche 14 und der Fläche 20 einen Zwischenraum von etwa 50° auf. Ebenso ist zwischen der Fläche 14 und der Fläche 21 ein Freiraum in Umfangsrichtung von etwa 50° vorgesehen. Der Bereich der Ausnehmung 13, in der der rohrförmige Umlenkkörper 5 einliegt, ist in Umfangsrichtung etwas größer als die zuvor beschriebenen Bereiche. Die Ausnehmung 13 erstreckt sich in Umfangsrichtung der äußeren Oberfläche der Kugelmutter 1 über etwa 110°.

Die Hülse 12 ist zwischen ihrer äußeren Umfangsfläche, die vollständig geschlossen und kreiszylindrisch ausgebildet ist und den Anlageflächen 14, 20 und 21 mit Ausnehmungen 22 versehen, die ein elastisches Federn der Anlageflächen 14, 20 und 21 in Radialrichtung ermöglichen und die so sicherstellen, dass auch bei Temperaturschwankungen, wie sie im Betrieb einer Kraftfahrzeuglenkung zu erwarten sind, die Hülse 12 fest und geräuschfrei auf der Kugelmutter 1 sitzt. Durch diese Gestaltung sind die Fertigungstoleranzen dieser beiden Bauteile unkritisch.

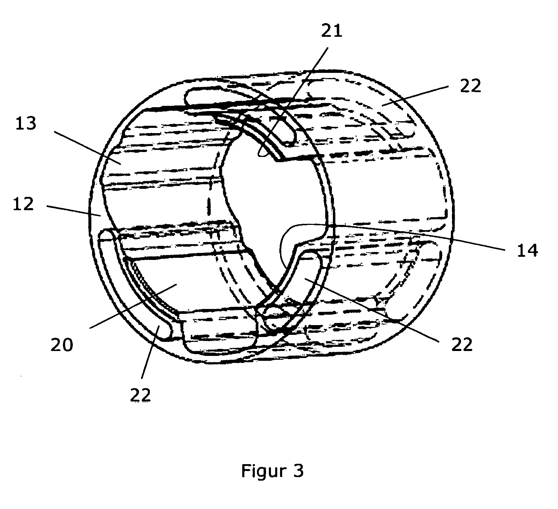

Die Figur 3 zeigt die Hülse 12 in einer perspektivischen Darstellung. Gleiche Bauteile tragen gleiche Bezugsziffern. In dieser Darstellung ist erkennbar, dass die Hülse 12 eine geschlossene kreiszylindrische äußere Oberfläche ohne Ausnehmungen oder Vorsprünge aufweist. Diese Gestaltung gewährleistet, dass die Hülse 12 nicht durch etwa anliegende Bruchstücke von schadhaften Getriebeteilen des Servoantriebs gegenüber dem nicht dargestellten, die Kugelmutter umgebenden Lenkungsgehäuse blockiert werden kann.

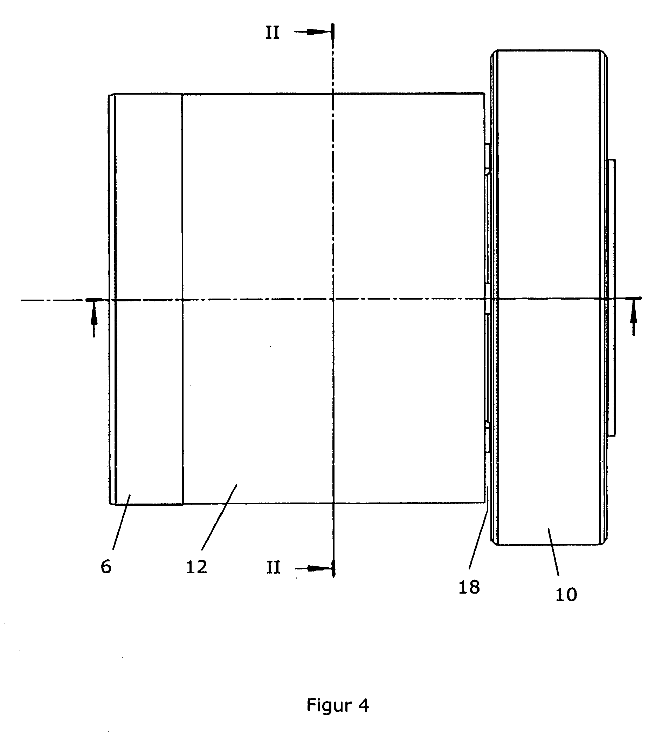

Die Figur 4 zeigt schließlich eine Seitenansicht entsprechend der Darstellung der Figur 1, jedoch ohne Schnitt. Die Linie II - II kennzeichnet die Lage des Schnittes, der in Fig. 2 dargestellt ist. Die Riemenscheibe 15 ist bei dieser Darstellung nicht montiert. Es ist ersichtlich, dass die Baugruppe bestehend aus Kugelmutter mit dem kreiszylindrischen Flanschbereich 6 und der Hülse 12 eine vollkommen glatte äußere Umfangsfläche aufweist, die frei von jeglichen Ausnehmungen oder Vorsprüngen ist. Selbst der Spalt 18 zwischen der Hülse 12 und dem Wälzlager 10 ist rotationssymmetrisch, so dass auch hier eindringende Komponenten sich nicht gegenüber dem Gehäuse außen umgebenden Gehäuse verkeilen können. Es ist bei dieser Bauart

gewährleistet, dass bei einem Bruch von Antriebskomponenten im Bereich des Servoantriebs, insbesondere auch bei einem Bruch der Riemenscheibe 15 selbst, keine Blockierung des Kugelumlaufs gegenüber dem Lenkungsgehäuse eintreten kann. Die Kraftfahrzeuglenkung bleibt dann zwar ohne Servoantrieb, jedoch ist sie manuell nach wie vor betätigbar, weil der Kugelumlauf und der gesamte Spindeltrieb weder selbsthemmend ist noch durch die im Umfangsbereich der Kugelmutter 1 möglicherweise anfallenden Bruchstücke blockiert werden kann. Die Kugelmutter 1 mit der Hülse 12 kann sich aufgrund ihrer vollkommen glatten äußeren Oberfläche auch dann drehen, wenn sie von Bruchstücken beliebiger Materialien und Abmessungen in dem Lenkungsgehäuse umgeben ist.

Auf diese Weise wird eine Kraftfahrzeuglenkung geschaffen, die auch bei einem Bruch von Antriebskomponenten des Servoantriebs betriebssicher ist und die zudem in der beschriebenen Weise einfach und mit einer geringen Anzahl von Bauteilen zu fertigen ist.

### Bezugszeichen

1. Kugelmutter
2. Kugelgewinde
3. Kugel
4. Bohrung
5. Umlenkkörper
6. Flansch
7. Gewindebohrungen
8. Achse
9. Lagersitz
10. Kugellager
11. Bereich
12. Hülse
14. Anlagefläche
15. Riemenscheibe
16. Spalt
17. Scheibe
18. Spalt
20. Fläche
21. Fläche
22. Ausnehmungen

## Patentansprüche

1. Kugelgewindetrieb mit einer auf einer Gewindespindel drehbar gelagerten Kugelmutter (1), an deren Innenumfang wenigstens ein um eine Achse (8) schraubenförmig gewundenes Kugelgewinde(2) zum Abwälzen von Kugeln (3) vorgesehen ist, wobei wenigstens ein am Außenumfang der Kugelmutter (1) angeordneter, mit einem Umlenkkanal für die Kugeln (3) versehener Umlenkkörper (5) mit seinen beiden Enden einen Anfang einer Windung mit einem Ende einer Windung des Kugelgewindes verbindet, um ein endloses Umlaufen der Kugeln (3) zu ermöglichen, wobei die Kugelmutter (1) mit einem Flansch (6) für die Befestigung einer Riemenscheibe (15) und mit einem Lagersitz (9)versehen ist, und wobei eine auf die Kugelmutter aufgesteckte Hülse (12) mit einer kreiszylindrischen äußeren Umfangsfläche vorgesehen ist, die den Umlenkkörper (5) an der Kugelmutter (1) sichert und die die Kugelmutter (1) zwischen dem Flansch (6) und dem Lagersitz (9) rohrförmig umgibt, **dadurch gekennzeichnet, dass** die Hülse (12) an ihrer Innenseite drei bogenförmige, federnde Stützbereiche (14, 20, 21) aufweist, die etwa gleichwinklig über den inneren Umfang verteilt sind und die an der äußeren Oberfläche (11) der Kugelmutter (1) in Umfangsrichtung jeweils über einen Umfangswinkel von 40° - 60° anliegen.

2. Kugelgewindetrieb nach Anspruch 1, **dadurch gekennzeichnet, dass** die Hülse (12) einstückig ausgebildet ist und auf ihrer Innenseite Anlageflächen (14, 20, 21) aufweist, die auf der äußeren Oberfläche (11) der Kugelmutter (1) mit einem Schiebesitz reibschlüssig anliegen.

3. Kugelgewindetrieb nach einem der vorhergehenden Ansprüche, **dadurch gekennzeichnet, dass** der Umlenkkörper (5) für die Kugelrückführung aus einem etwa U-förmigen Metallrohr einteilig gefertigt ist.

4. Kugelgewindetrieb nach einem der vorhergehenden Ansprüche, **dadurch gekennzeichnet, dass** die Hülse (12) eine innen liegende Ausnehmung (13) aufweist, die einen derartigen Abstand von der Oberfläche (11) der Kugelmutter (1) aufweist, dass der Umlenkkörper (5) fest in dieser Ausnehmung (13) sitzt.

5. Kugelgewindetrieb nach einem der vorhergehenden Ansprüche, **dadurch gekennzeichnet, dass** ein Anschluss für die Riemenscheibe (15) an der dem Lagersitz (9) abgewandten Stirnseite der Kugelmutter (1) ausgebildet ist.

6. Kugelgewindetrieb nach einem der vorhergehenden Ansprüche, **dadurch gekennzeichnet , dass** die Riemenscheibe (15) mittels Befestigungsmitteln an der Stirnseite des Flansches (6) drehfest mit der Kugelmutter (1) verbunden ist.

7. Kugelgewindetrieb nach einem der vorhergehenden Ansprüche, **dadurch gekennzeichnet, dass** der Außendurchmesser des Flansches (6) gleich dem Außendurchmesser der Hülse (12) ist.

8. Kugelgewindetrieb nach einem der vorhergehenden Ansprüche, **dadurch gekennzeichnet, dass** die Riemenscheibe (15) koaxial auf den äußeren Umfang des Flansches (6) aufgepresst ist und das dem Flansch (6) benachbarte Ende der Hülse (12) überragt.

9. Kugelgewindetrieb nach einem der vorhergehenden Ansprüche, **dadurch gekennzeichnet, dass** an dem Ende der Hülse (12), das dem Flansch (6) abgewandt ist, die Hülse (12) in einem geringen Abstand von einem Wälzlager (10) endet, das die Kugelmutter (1) in einem Lenkungsgehäuse lagern kann.

10. Kugelgewindetrieb nach einem der vorhergehenden Ansprüche, **dadurch gekennzeichnet, dass** ein Spalt (16) mit einer radialen Breite von 0,1 - 1 mm zwischen der Hülse (12) und der Innenseite der Riemenscheibe (15) vorgesehen ist.

## Claims

1. Ball-type linear drive with a ball nut (1) pivoted on a threaded spindle, with at least one ball screw (2) spirally wound around an axis (8) designated for ball removal (3) on its inner circumference, wherein at least one deflection body (5) arranged on the outer circumference of the ball nut (1) and equipped with a deflection channel for the balls (3) which connects the start of a coil with the end of a coil on the threaded spindle with both of its ends, to allow the balls (3) to revolve endlessly, wherein the ball nut (1) is equipped with a flange (6) to attach a pulley (15) and a bearing seat (9), and wherein a bushing (12) pinned to the ball nut has a designated cylindrical outer peripheral surface which secures the deflection body (5) to the ball nut (1) and which surrounds the flange (6) and the bearing seat (9) in a tubular shape, **characterised in that** the interior of the bushing (12) has three arched, flexible support sections (14, 20, 21), which are distributed equiangularly across the inner circumference and are in contact with the external top surface (11) of the ball nut (1) in the peripheral direction each with an angle of circumference of 40° - 60°.

2. Ball-type linear drive according to Claim 1, **characterised in that** the bushing (12) is designed to be one piece and has contact surfaces (14, 20, 21) on its interior, which are frictionally engaged with a push fit to the external top surface (11) of the ball nut (1).

3. Ball-type linear drive according to any one of the preceding claims, **characterised in that** the deflection body (5) for the ball return is manufactured from a U-shaped single-section metal pipe.

4. Ball-type linear drive according to any one of the preceding claims, **characterised in that** the bushing (12)has an internal recess (13) which is at a distance from the top surface (11) of the ball nut (1) which allows the deflection body (5) to sit securely in the recess.

5. Ball-type linear drive according to any one of the preceding claims, **characterised in that** the ball nut (1) is designed with a connection for the pulley (15) on the face which is turned away from the bearing seat (9).

6. Ball-type linear drive according to any one of the preceding claims, **characterised in that** the pulley (15) is connected using fasteners on the face of the flange (6) in a torque-proof manner to the the ball nut (1).

7. Ball-type linear drive according to any one of the preceding claims, **characterised in that** the external diameter of the flange (6) is equal to the external diameter of the bushing (12).

8. Ball-type linear drive according to any one of the preceding claims, **characterised in that** the pulley (15)is coaxially forced on to the outer rim of the flange (6) and that the end of the bushing (12) adjacent to the flange (6) sticks out.

9. Ball-type linear drive according to any one of the preceding claims, **characterised in that**, at the end of the bushing (12) which is turned away from the flange (6), the bushing (12) ends at a short distance from a roller bearing (10) which can mount the ball nut (1) in a steering housing.

10. Ball-type linear drive according to any one of the preceding claims, **characterised in that** there is a designated gap (16) with a radial breadth of 0.1 - 1 mm between the bushing (12) and the interior of the pulley (15).

## Revendications

1. Vis d'entraînement à billes, comprenant un écrou à billes (1) monté rotatif sur une broche filetée, à la périphérie intérieure duquel est prévue au moins une vis à billes (2), à filets hélicoïdaux s'étendant autour d'un axe (8), pour le déplacement des billes (3), où au moins un élément de déviation (5), pourvu d'un canal de déviation pour les billes (3), disposé à la périphérie extérieure de l'écrou à billes (1), relie, par ses deux extrémités, un début d'un filet, avec une extrémité d'un filet de la vis à billes, en vue de permettre une circulation sans fin des billes (3), l'écrou à billes (1) étant pourvu d'une bride (6) pour la fixation d'une poulie de commande (15) et d'un siège de palier (9), et où il est prévu un manchon (12) à face périphérique externe cylindrique circulaire, emboîté sur l'écrou à billes, qui bloque l'élément de déviation (5) sur l'écrou à billes (1), et qui entoure, de manière tubulaire, l'écrou à billes (1) entre la bride (6) et le siège de palier (9), **caractérisée en ce que** le manchon (12) présente sur sa face intérieure trois zones de support à effet ressort arquées (14, 20, 21) qui sont reparties de sorte à former un même angle sur la périphérie intérieure et qui reposent respectivement en direction périphérique, au niveau d'un angle périphérique de 40°-60°, sur la surface extérieure (11) de l'écrou à billes (1).

2. Vis d'entraînement à billes selon la revendication 1, **caractérisée en ce que** le manchon (12) est réalisé en une seule pièce et qu'il présente, sur sa face intérieure, des surfaces d'appui (14, 20, 21) qui reposent par friction avec un siège coulissant sur la surface extérieure (11) de l'écrou à billes (1).

3. Vis d'entraînement à billes selon une des revendications précédentes, **caractérisée en ce que** l'élément de déviation (5) est réalisé en une seule pièce à partir d'une tube métallique en forme de U pour le retour des billes.

4. Vis d'entraînement à billes selon une des revendications précédentes, **caractérisée en ce que** le manchon (12) présente un évidement (13) gisant à l'intérieur qui présente un tel écart depuis la surface (11) de l'écrou à billes (1) que l'élément de déviation (5) est solidement fixé dans cet évidement (13).

5. Vis d'entraînement à billes selon une des revendications précédentes, **caractérisée en ce que** un raccordement est formé pour la poulie de commande (15) sur la face à l'opposé du siège de palier (9) de l'écrou à billes (1).

6. Vis d'entraînement à billes selon une des revendications précédentes, **caractérisée en ce que** la poulie de commande (15) est reliée solidairement en rotation avec l'écrou à billes (1) sur la face de la bride (6) à l'aide de moyens de fixation.

7. Vis d'entraînement à billes selon une des revendications précédentes, **caractérisée en ce que** le diamètre extérieur de la bride (6) est identique au diamètre extérieur du manchon (12).

8. Vis d'entraînement à billes selon une des revendications précédentes, **caractérisée en ce que** la poulie de commande (15) est engagée par pression de manière coaxiale sur la périphérie extérieure de la bride (6) et dépasse l'extrémité du manchon (12) étant adjacente à la bride (6) .

9. Vis d'entraînement à billes selon une des revendications précédentes **caractérisée en ce que**, à l'extrémité du manchon (12) étant opposée à la bride (6), le manchon (12) aboutit à un faible écart d'un palier à rouleau (10) accueillant l'écrou à billes (1) dans un boîtier de direction.

10. Vis d'entraînement à billes selon une des revendications précédentes, **caractérisée en ce que** l'on prévoit une fente (16) ayant une largeur radiale de 0,1-1 mm entre le manchon (12) et la face intérieure de la poulie de commande (15).
